Europäisches Patentamt

European Patent Office

Office européen des brevets

(11) Veröffentlichungsnummer: **0 306 638**
**A1**

## (12) EUROPÄISCHE PATENTANMELDUNG

(21) Anmeldenummer: 88109823.0

(51) Int. Cl.⁴: **H05B 3/58**

(22) Anmeldetag: 21.06.88

(30) Priorität: 11.09.87 DE 3730580

(43) Veröffentlichungstag der Anmeldung:
15.03.89 Patentblatt 89/11

(84) Benannte Vertragsstaaten:
AT BE DE ES FR GB IT NL SE

(71) Anmelder: AEG KABEL Aktiengesellschaft
Bonnenbroicher Strasse 2-14
D-4050 Mönchengladbach 2(DE)

(72) Erfinder: Bablel, Gerhard, Dr.
An Gut Forensberg 46
D-5120 Herzogenrath 3(DE)

(74) Vertreter: Langer, Karl-Heinz, Dipl.-Ing.
Licentia Patent-Verwaltungs-GmbH
Theodor-Stern-Kai 1
D-6000 Frankfurt/Main 70(DE)

(54) **Thermoschlauch.**

(57) Bei einem elektrisch heizbaren Schlauch, bei dem durch das Fließen eines elektrischen Stromes durch die zwischen längslaufenden Elektroden angeordneten Widerstände joulesche Wärme entsteht, ist vorgesehen, daß die Elektroden (1) im Mantel des Schlauches eingebettet sind und zwischen ihnen eine homogene leitfähige Schicht (2) angeordnet ist und daß diese Schicht im wesentlichen die Schlauchwand bildet.

EP 0 306 638 A1

## Thermoschlauch

Die Erfindung betrifft einen elektrisch heizbaren Schlauch nach dem Oberbegriff des Anspruchs 1.

Um Flüssigkeiten beim Transport durch einen Schlauch zu erwärmen, geht man üblicherweise so vor, daß man um den Schlauch eine Heizbandage wickelt, die durch direkten Stromdurchgang erhitzt wird. Aus der DE-OS 31 52 305, entsprechend der WO 82/00935, ist es bekannt, ein Rohr mit zwei gestreckten parallelen Elektroden zu versehen und im Kontakt mit diesen Elektroden auf das Rohr eine leitfähige Schicht aufzubringen. Diese aufgebrachten Schichten haben jedoch den Nachteil, daß sie äußerst empfindlich gegen mechanische Beschädigung sind. Außerdem steht die Wärmekapazität des Rohres einer schnellen Erhitzung entgegen.

Der Erfindung liegt die Aufgabe zugrunde, einen elektrisch heizbaren Schlauch anzugeben, der einen guten Wärmeübergang zwischen der Wärme erzeugenden Schicht und der Flüssigkeit im Schlauch gewährleistet. Der Schlauch sollte leicht herstellbar und unempfindlich gegen äußere Beschädigungen sein. Diese Aufgabe wird bei einem elektrisch heizbaren Schlauch der eingangs geschilderten Art gemäß der Erfindung durch die im Anspruch 1 gekennzeichneten Merkmale gelöst. Weiterbildungen der Erfindung sind in den Unteransprüchen gekennzeichnet. Einsatzgebiete der Erfindung sind Versorgungssysteme für Flüssigkeiten, beispielsweise Kraftstoffe, welche eine bestimmte Viskosität nicht unterschreiten dürfen. Ein Anwendungsbeispiel ist die Versorgung von Dieselfahrzeugen mit Kraftstoff.

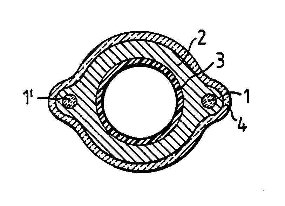

Ein Ausführungsbeispiel der Erfindung wird nachstehend anhand der Zeichnung näher erläutert:

Die Figur zeigt einen Querschnitt durch einen elektrisch heizbaren Schlauch. Dieser Schlauch besitzt Elektroden 1,1', zwischen denen leitfähige Zylinderabschnitte 2 liegen. Der Strom fließt in den Elektroden vorzugsweise senkrecht zur Zeichenebene, verläßt diese Elektroden und verteilt sich im Mantel des zylindrischen Schlauches, wo er in der Zeichenebene von einer Elektrode zur anderen fließt. Zur Potentialtrennung ist die leitfähige zylindrische Mantelschicht durch eine innere Mantelschicht 3 geschützt. Diese innere Schicht 3 sollte eine gute Wärmeleitfähigkeit besitzen. Nach außen ist die elektrisch leitfähige Schicht von einer wärmeisolierenden Schicht 4 umgeben. Die Elektroden können auch vollständig in den leitfähigen Mantel 2 eingebettet sein, sodaß nach außen der heizbare Schlauch völlig zylindersymmetrisch erscheint.

Diese Elektrodenanordnung im Mantel des Schlauches hat den Vorteil, daß der Schlauch in beliebiger Länge einsatzfähig ist. Ein weiterer Vorteil der Erfindung besteht darin, daß das Material, welches der Erzeugung der Wärme dient, auch gleichzeitig für die Festigkeit der Schlauchwand verwendet wird. Es wird damit eine optimale Materialausnutzung erzielt. Außerdem ist die Heizleistung vollständig homogen über den gesamten Schlauch verteilt. Besonders vorteilhaft ist es, den Schlauch durch Extrusion herzustellen.

## Ansprüche

1. Elektrisch heizbarer Schlauch, bei dem durch das Fliessen eines elektrischen Stromes durch die zwischen längslaufenden Elektroden angeordneten Widerstände joulesche Wärme entsteht, dadurch gekennzeichnet, daß die Elektroden (1) im Mantel des Schlauches eingebettet sind und zwischen ihnen eine homogene leitfähige Schicht (2) angeordnet ist und daß diese Schicht im wesentlichen die Schlauchwand bildet.

2. Elektrisch heizbarer Schlauch nach Anspruch 1, dadurch gekennzeichnet, daß der Strom durch die Zylinderabschnitte (2) zwischen den Elektroden jeweils tangential und senkrecht zur Zylinderachse fließt.

3. Elektrisch heizbarer Schlauch nach Anspruch 1 oder 2, dadurch gekennzeichnet, daß die elektrisch leitende Schicht als konstruktives Element des Schlauches eine hohe Zerreißfestigkeit aufweist und mechanische Quer- und Längskräfte aufnimmt.

4. Elektrisch heizbarer Schlauch nach einem der Ansprüche 1 bis 3, dadurch gekennzeichnet, daß zwei Elektroden (1,1') vorgesehen sind.

5. Elektrisch heizbarer Schlauch nach einem der Ansprüche 1 bis 3, dadurch gekennzeichnet, daß drei Elektroden vorgesehen sind, welche an ein Dreiphasennetz angeschlossen sind.

6. Elektrisch heizbarer Schlauch nach einem der Ansprüche 1 bis 5, dadurch gekennzeichnet, daß die leitfähige Schicht aus halbleitendem Material besteht, welches durch Extrusion herstellbar ist.

7. Elektrisch heizbarer Schlauch nach Anspruch 6, dadurch gekennzeichnet, daß die elektrisch leitfähige Schicht (2) aus einer Mischung von Polymer-Grundmaterial und Ruß oder Graphit besteht.

8. Elektrisch heizbarer Schlauch nach einem der Ansprüche 1 bis 7, dadurch gekennzeichnet, daß die Elektroden (1) aus einer Kupferlitze bestehen.

9. Elektrisch heizbarer Schlauch nach einem der Ansprüche 1 bis 7, dadurch gekennzeichnet, daß die Elektroden (1) aus leitfähigem Kunststoff bestehen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 194 536 (STINE et al.)<br>* Spalte 7, Zeile 61 - Spalte 8, Zeile 13; Figur 13 *<br>--- | 1-7 | H 05 B 3/58 |
| X | GB-A-2 065 430 (JUNKOSHA CO.)<br>* Seite 2, Zeilen 65-120; Figur 3 *<br>--- | 1,2,4,6,7 | |
| A | FR-A-2 452 768 (E-B INDUSTRIES)<br>* Seite 12, Zeilen 2-14; Figur 6 *<br>--- | 1,2,4,6-8 | |
| A | FR-A-2 454 349 (RHONE-POULENC)<br>--- | | |
| A | FR-A-1 510 940 (TEXAS INSTRUMENTS)<br>--- | | |
| A | FR-A-2 361 612 (DATWYLER AG)<br>----- | | |

RECHERCHIERTE SACHGEBIETE (Int. Cl.4)

H 05 B 3/00
F 24 H 1/00

Der vorliegende Recherchenbericht wurde für alle Patentansprüche erstellt

| Recherchenort | Abschlußdatum der Recherche | Prüfer |
|---|---|---|
| DEN HAAG | 25-11-1988 | RAUSCH R.G. |